# EUROPEAN PATENT SPECIFICATION

(11) **EP 1 519 232 B1**
(45) Date of publication and mention of the grant of the patent: **16.04.2008**
(21) Application number: 04019039.9
(22) Date of filing: 11.08.2004
(51) Int. Cl.: G03F 7/20, G02B 7/14

(54) **Optical device and exposure device equipped with said optical device**
Optische Vorrichtung und diese beinhaltende Belichtungsvorrichtung
Dispositif optique et dispositif d'exposition en étant equipé

(30) Priority: 29.09.2003 JP 2003336769
(43) Date of publication of application: 30.03.2005
(73) Proprietor: FUJIFILM Corporation, Minato-ku Tokyo (JP)
(72) Inventor: Fukuda, Takeshi c/o Fuji Photo Film Co., Ltd., Ashigarakami-gun Kanagawa (JP); Takada, Norihisa c/o Fuji Photo Film Co., Ltd., Ashigarakami-gun Kanagawa (JP)
(74) Representative: Klunker . Schmitt-Nilson . Hirsch

(56) References cited:
- JP-A- 62 180 336
- JP-A- 2001 162 863
- US-A- 5 497 272
- US-A- 5 946 123

## Description

### BACKGROUND OF THE INVENTION

### Technical Field

The present invention relates to an optical device which has a beam diameter changing mechanism which changes a beam diameter, and an alignment mechanism which moves the focal point position of a light beam in the direction of the optical path so as to adjust the focal point position. The present invention also relates to an exposure device which has this optical device.

### Description of the Related Art

Conventionally, exposure devices which carry out exposure by a light beam have a beam diameter changing mechanism which changes a beam diameter in accordance with a switching of the recording resolution, and an alignment mechanism which moves the focal point position (focus position) of the light beam in the direction of the optical path of the light beam so as to adjust the focal point position (see, for example, Japanese Patent Application Laid-Open (JP-A) No. 2001-162863).

Here, a driving section which can impart a large amount of movement is required in order to drive the beam diameter changing mechanism. A driving section, which can impart a slight amount of movement effective for fine adjustment, is required in order to drive the alignment mechanism. Therefore, generally, the both driving sections are provided separately.

However, there is the problem that providing the driving sections separately is an impediment to making the exposure device more compact, and a common driving section is desired.

Examples of devices for shifting lenses are given in US 5497272, US 5946123 and JP 62-180336.

### SUMMARY OF THE INVENTION

In view of the aforementioned, an object of the present invention is to provide an optical device which can be made compact and which can carry out, by a single driving section, the changing of a beam diameter accompanying the switching of the recording resolution, and the moving and adjustment of the focal point position of the light beam in the direction of the optical path of the light beam, and to provide an exposure device which has this optical device.

The present inventors focused on the fact that, by forming the cam surface of an eccentric cam in a form which is near circular, the amount of change in the position of a member abutting the cam surface can be made to be slight. Further, the diligent studies of the present inventors led to their achieving the present invention.

A first aspect of the present invention is an optical device having the features of claim 1..

In the present invention, the beam diameter may be changed by switching the optical lens which is disposed on the optical path by switching the position of the optical member by the linking means. The rotational angle of the rotating shaft at this time is relatively large. Then, by rotating the cam, the alignment mechanism is driven, and adjustment of the focal point position is carried out. The rotational angle of the rotating shaft at this time is small as compared with the case of switching the position of the optical member.

In accordance with the present invention, there is realized an optical device which is compact and which can carry out, by a single motor, the changing of a beam diameter by switching, by the linking means, the optical element disposed on the optical path, and the moving and adjustment, by the alignment mechanism, of the focal point position of the light beam in the direction of the optical path.

Note that, in order to make the structure of the device simple, the rotating shaft of the cam is often oriented orthogonal to the optical path.

In the present invention, the optical elements may be lenses which are provided such that optical axis directions of the lenses are parallel to one another. It is thereby easy to make the optical member compact.

In the present invention, the optical element may be one member of members structuring an expander. In this way, in a case in which the optical device has an expander, effects can be exhibited without increasing the number of parts.

In the present invention, the alignment mechanism may have: an alignment member holding the optical member; and a plate spring swingably supporting the alignment member, and urging the alignment member along the optical axis direction to abut the cam surface. The structure of the alignment mechanism can thereby be made simple.

In the present invention, the alignment mechanism may have a supporting mechanism structured by a pair of plate springs which are disposed parallel to one another. In this way, it is easy to make the alignment mechanism be a simple structure which can stably maintain the alignment position of the optical member.

An exposure device of a second aspect of the present invention comprises: a light source; the above-described optical device through which passes a light beam exiting from the light source; and a focusing optical system focusing the light beam, which has passed through the optical device, onto a surface to be exposed.

In this way, an optical device, which is compact and which can, as the recording resolution changes, change the beam diameter of the light beam passing therethrough, is provided at the exposure device. Therefore, the exposure device can be made to be compact and easy to manufacture.

Effects achieved by forming the present invention to have the above-described structure include the following.

In accordance with an embodiment of the present invention, there is realized an optical device which is compact and which can carry out, by a single motor, the changing of a beam diameter by switching, by the linking means, the optical lens disposed on the optical path, and the moving and adjustment, by the alignment mechanism, of the focal point position of the light beam in the direction of the optical path.

In accordance with the present invention, it easy to make the optical member compact.

In accordance with the present invention, in a case in which the optical device has an expander, effects can be exhibited without increasing the number of parts.

In accordance with the present invention, the structure of the alignment mechanism can be made simple.

In accordance with the present invention, it is easy to make the alignment mechanism be a simple structure which can stably maintain the alignment position of the optical member.

In accordance with the present invention, the optical device, which is compact and which can, as the recording resolution changes, change the beam diameter of the light beam passing therethrough, is provided at the exposure device. Therefore, the exposure device can be made to be compact and easy to manufacture.

### BRIEF DESCRIPTION OF THE DRAWINGS

Fig. 1 is a schematic diagram showing exposure at a high resolution at an exposure device relating to an embodiment of the present invention.
Fig. 2 is a schematic diagram showing exposure at a low resolution at the exposure device relating to the embodiment of the present invention.
Fig. 3 is a perspective view of an optical device relating to the embodiment of the present invention.
Fig. 4 is a perspective view of the optical device relating to the embodiment of the present invention.
Figs. 5A and 5B are respectively a plan view and a side view showing a state of carrying out exposure at a high resolution by using the optical device relating to the embodiment of the present invention.
Fig. 6 is a plan view showing aligning of an optical lens position at the time of carrying out exposure at a high resolution by using the optical device relating to the embodiment of the present invention.
Fig. 7 is a plan view showing switching from a high resolution to a low resolution state by using the optical device relating to the embodiment of the present invention.
Fig. 8 is a plan view showing aligning of the optical lens position at the time of carrying out exposure at a low resolution by using the optical device relating to the embodiment of the present invention.
Fig. 9 is a plan view showing a state of carrying out exposure at a low resolution by using the optical device relating to the embodiment of the present invention.

### DETAILED DESCRIPTION OF THE INVENTION

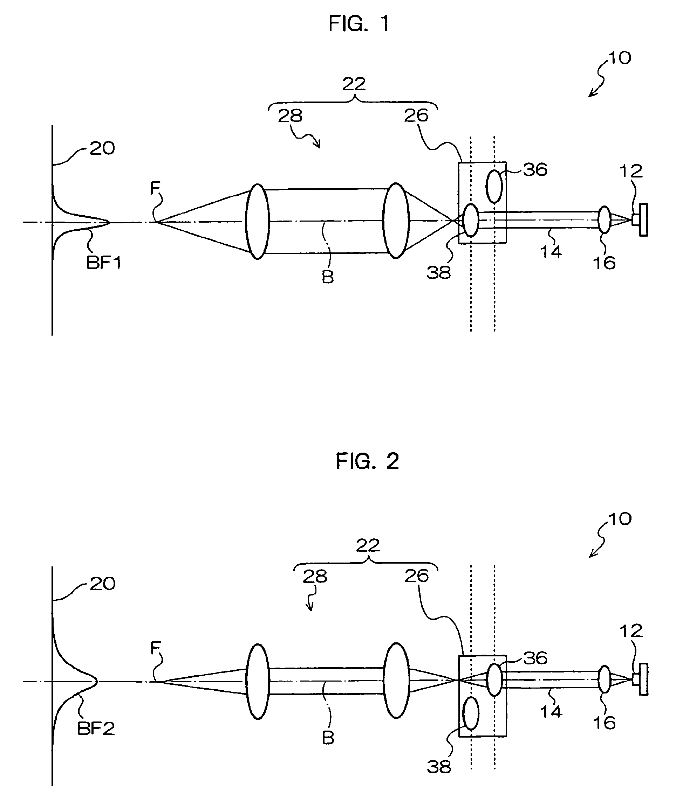

Hereinafter, an embodiment of the present invention will be described on the basis of an example. As shown in Figs. 1 and 2, an exposure device 10 relating to the embodiment of the present invention has a semiconductor laser device 12; a convex lens 16 which makes the laser light emitted from the semiconductor laser device 12 into parallel light (a collimated beam) 14; and a collecting optical system 22 which collects the parallel light 14, which has passed through the convex lens 16, onto a surface to be exposed 20 of a recording medium which is an object of exposure. The collecting optical system 22 has an optical device 26 at which the parallel light 14 is incident; and a focusing optical system 28 which makes the light beam, which has passed through the optical device 26, arrive at the surface to be exposed 20 and connects the focal points. In accordance with such a structure, optical paths are formed in the exposure device 10 at both the front and the back of the optical device 26 in the optical path advancing direction.

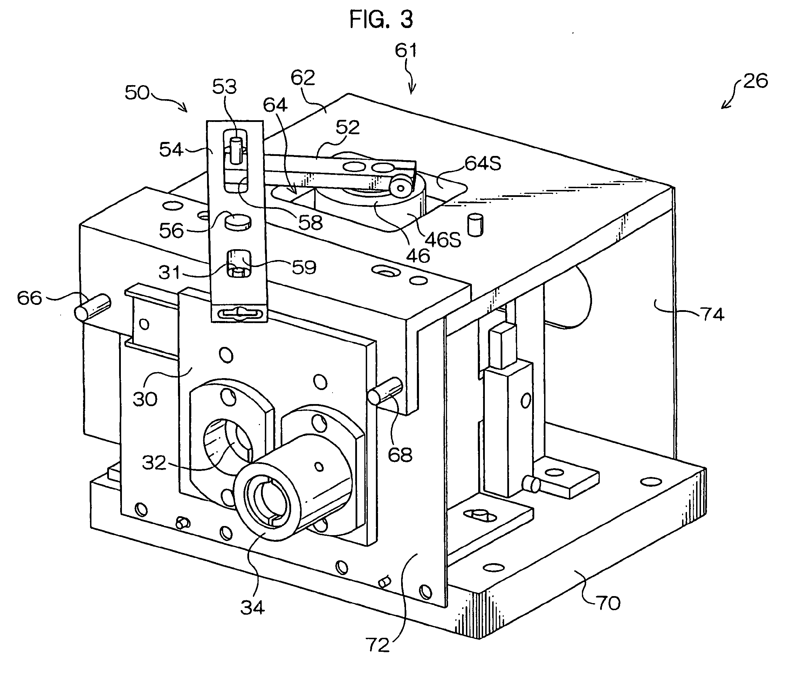

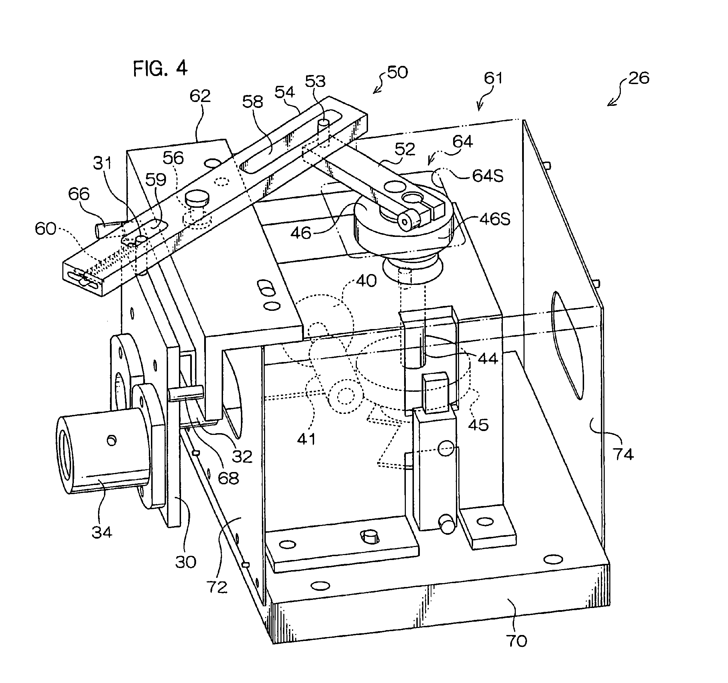

An optical member 30, which is held so as to be slidable in a direction orthogonal to an optical path B of the parallel light 14, is provided at the optical device 26 (see Figs. 3 through 5).

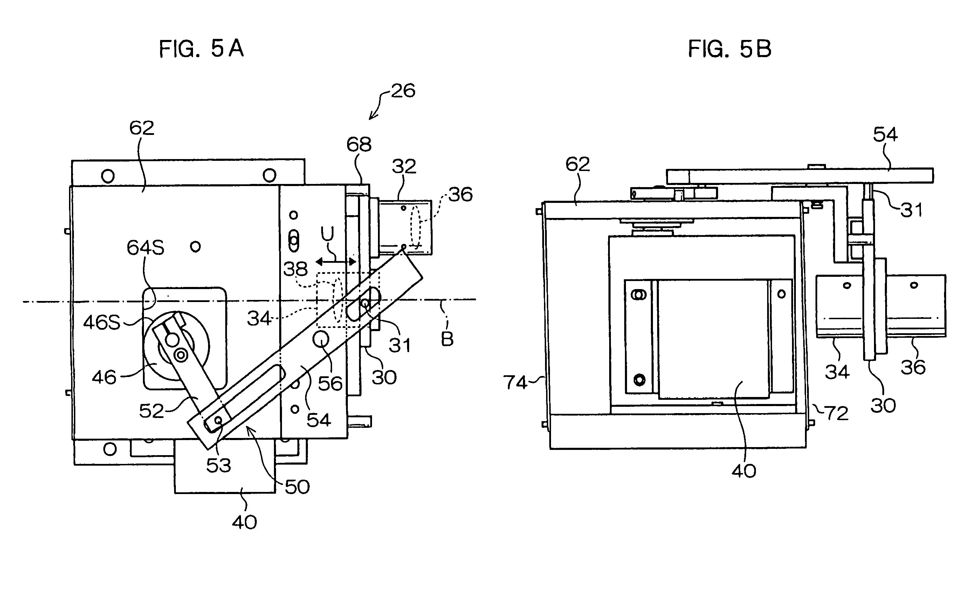

As shown in Fig. 5, optical lenses 36, 38 are provided within lens barrels 32, 34, which structure the optical member 30, respectively, such that optical axis directions U of the optical lenses 36, 38 are parallel to the optical path B. Due to the optical member 30 sliding as mentioned above, the optical lens 36, 38 positioned on the optical path B can be switched. The focal lengths of the optical lenses 36, 38 are respectively different. The optical lens 38 is a lens for a short focal length, and the optical length 36 is a lens for a long focal length. Further, a pin portion 31, which projects upward and to which sliding force is transmitted, is formed at the optical member 30.

As shown in Figs. 3 through 5, the optical device 26 has a stepping motor 40 (hereinafter simply called "motor 40") whose rotational direction can be switched; an eccentric cam 46 attached to the distal end portion of a rotating shaft 44 which is orthogonal to the optical path B; and a linking mechanism 50 which is connected to the eccentric cam 46, and which, by switching the position of the optical member 30 as described above, switches the optical lens 36, 38 which is positioned on the optical path B.

A gear 41 is attached to the rotating shaft of the motor 40. A gear 45, which has a larger diameter than the gear 41, is attached to the rotating shaft 44. The gear 41 and the gear 45 mesh together. The numbers of gears of the gears 41, 45 are determined in consideration of the rotational speed of the motor 40, the dimensions of the eccentric cam 46, and the like.

The linking mechanism 50 has a rod member 52 which is fixed to the top surface of the eccentric cam 46, and which rotates accompanying the rotation of the eccentric cam 46; and a link rod 54 which is mounted to an alignment member 62, which holds the optical member 30 and which will be described later, so as to be freely rotatable at a rotation point 56. A pin portion 53 which projects upward is formed at the distal end portion of the rod member 52. A long hole 58, which extends along the longitudinal direction of the link rod 54, is formed at the end portion of the link rod 54 which end portion is near the pin portion 53. The pin portion 53 is inserted in the long hole 58. A long hole 59, which runs along the longitudinal direction of the link rod 54, is formed in another end portion of the link rod 54. The pin portion 31 of the optical member 30 is inserted in the long hole 59.

Further, a compression coil spring 60, which, by urging the pin portion 31 toward the rotation point 56, urges the optical member 30 toward the alignment member 62 which will be described later, is provided at this other end portion of the link rod 54.

An alignment mechanism 61, which holds the optical member 30 and which moves the optical member 30 in the optical axis direction U within the range of play of the linking mechanism 50, is provided at the optical device 26.

The alignment mechanism 61 has the alignment member 62 which holds the optical member 30 slidingly.

An opening 64 is formed in a substantially central position of the alignment member 62. A cam surface 46S of the eccentric cam 46 abuts a planar opening wall 64S of the opening 64, which, among the opening walls of the opening 64, is the opening wall formed at the side in the direction opposite to the advancing direction of the optical path B. Stoppers 66, 68, which carry out positioning of the optical member 30 at the time of switching of the optical lens disposed on the optical path B, are formed at the alignment member 62.

The alignment mechanism 61 has plate springs 72, 74 which are mounted to the optical path direction both side edge portions of the alignment member 62 and to a base 70 of the optical device 26, and which swingably support the alignment member 62, and which urge the alignment member 62 in the direction of the optical path and cause the alignment member 62 to abut the cam surface 46S. Due to these two plate springs 72, 74, the alignment member 62 carries out the operation of a parallel crank mechanism, and moves rectilinearly within a slight range of movement in the optical axis direction U which is needed for alignment. Further, the position of the alignment member 62 is maintained stably by the cam surface 46S and the plate springs 72, 74.

Hereinafter, operation of the optical device 26, and operation of the exposure device 10 which accompanies the operation of the optical device 26, will be described.

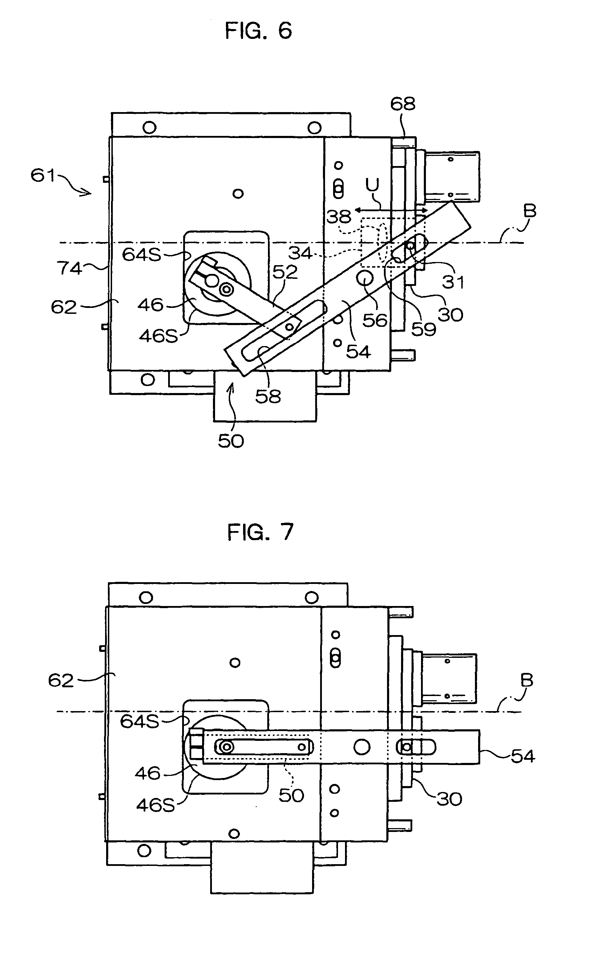

As shown in Fig. 1, in a case in which exposure is being carried out at a high resolution with a steep beam profile BF1, the motor 40 is rotated and the position of the optical member 30 is switched, such that the optical lens 38 of the short focal length is positioned on the optical path. The optical member 30 is anchored at the position to which it has been switched (see Figs. 3 through 5). In this state, as shown in Figs. 5 and 6, by adjusting the angle of rotation of the motor 40, the optical member 30 is moved in the optical axis direction U (which is parallel to the optical path B) within the range of play of the linking mechanism 50 (within the dead point region of the linking mechanism 50), such that the position of a focal point F can be adjusted.

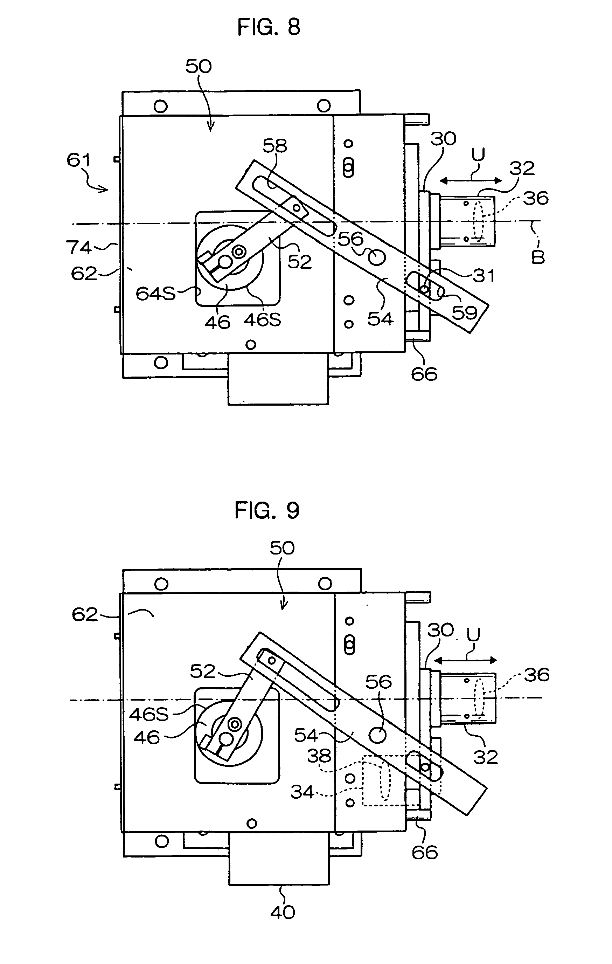

As shown in Fig. 2, in a case in which exposure is being carried out at a low resolution with a gradual beam profile BF2, the motor 40 is rotated and the position of the optical member 30 is switched, such that the optical lens 36 of the long focal length is positioned on the optical path. The optical member 30 is anchored at the position to which it has been switched (see Figs. 7 through 9). In this state as well, as shown in Figs. 8 and 9, by adjusting the angle of rotation of the motor 40, the optical member 30 is moved in the optical axis direction U within the range of play of the linking mechanism 50, such that the position of the focal point F can be adjusted.

As described above, in the present embodiment, the dynamic operation of moving the optical member 30 in order to switch the optical lens 36, 38 which is disposed on the optical path, and the fine operation of carrying out alignment in order to adjust the focal point position of the optical lens 36, 38, can be carried out by the single motor 40. Accordingly, the optical device 26 which is compact and low cost is realized. Further, by providing the optical device 26 in an exposure device 10, the exposure device 10 which is compact and low cost is realized.

Moreover, the optical member 30 is urged toward the alignment member 62 by the compression coil spring 60 which is attached to the link rod 54. Therefore, the position of the optical member 30 is prevented from being offset with respect to the alignment member 62.

## Claims

1. An optical device (26) having an optical axis, comprising:
an optical member (30) to which at least a first optical element (36) and a second optical element (38) are mounted;
a motor (40) whose rotating direction is switchable;
a cam (46) mounted to a rotating shaft (44) rotated by the motor;
linking means (50) connected to the cam, and adapted to switch the position of the optical member between a first position in which the first optical element (36) is disposed on the optical axis and the second optical element (38) is transversely displaced from the optical axis, and a second position in which the second optical element (38) is disposed on the optical axis and the first optical element (36) is transversely displaced from the optical axis; and
an alignment mechanism (61) holding the optical member, and abutting a cam surface (46S) of the cam, and adapted to move the optical member in the direction of the optical axis of the device within a range of play of the linking means.

2. The optical device of claim 1, wherein the first and second optical elements are lenses which are provided such that the optical axis directions of the lenses are parallel to one another.

3. The optical device of claim 1 or claim 2, wherein the first and second optical elements are members structuring an expander.

4. The optical device of any of claims 1 through 3, wherein the alignment mechanism has:
an alignment member holding the optical member; and
a plate spring swingably supporting the alignment member, and urging the alignment member along the optical axis direction to abut the cam surface.

5. The optical device of any of claims 1 through 4, wherein the alignment mechanism has a supporting mechanism structured by a pair of plate springs which are disposed parallel to one another.

6. The optical device of claim 1, wherein the linking means has a rod member which is fixed to a top side of the cam and which rotates accompanying rotation of the cam, and a link rod mounted, to an alignment member provided at the alignment mechanism, so as to be freely rotatable via a rotation point.

7. The optical device of claim 6, wherein the optical member has a pin portion, and a spring, which urges the optical member toward the alignment member by urging the pin portion toward the rotation point, is provided at one end portion of the link rod.

8. The optical device of claim 1, wherein the alignment mechanism has an alignment member which slidably holds the optical member, and an opening is formed at a substantially central position of the optical member, and the cam surface can abut an opening wall of the opening.

9. The optical device of claim 8, wherein the alignment mechanism further has a pair of plate springs, and the plate springs are attached to the alignment member and to a base, and swingably support the alignment member, and cause the alignment member to abut the cam surface by urging the alignment member along a direction of the optical path.

10. An exposure device comprising:
a light source;
the optical device of any of claims 1 through 9, through which passes a light beam exiting from the light source; and
a focusing optical system focusing the light beam, which has passed through the optical device, onto a surface to be exposed.

## Patentansprüche

1. Optisches Gerät (26) mit einer optischen Achse, umfassend:
ein optisches Teil (30), an dem ein erstes optisches Element (36) und ein zweites optisches Element (38) angebracht sind;
einen Motor (40) mit umschaltbarer Drehrichtung;
ein Steuerkurventeil (46), welches auf einer von dem Motor gedrehten Drehwelle (44) gelagert ist;
eine mit dem Steuerkurventeil verbundene Verbindungseinrichtung (50), ausgebildet zum Umschalten der Lage des optischen Teils zwischen einer ersten Stellung, in der das erste optische Element (36) sich auf der optischen Achse befindet und das zweite optische Element (38) quer gegenüber der optischen Achse versetzt ist, und einer zweiten Stellung, in der das zweite optische Element (38) sich auf der optischen Achse befindet und das erste optische Element (36) quer gegenüber der optischen Achse versetzt ist; und
einen Ausrichtmechanismus (61), der das optische Teil hält und an einer Steuerkurvenfläche (46S) des Steuerkurventeils anliegt, ausgebildet zum Bewegen des optischen Teils in der Richtung der optischen Achse des Geräts innerhalb eines Spiel bereichs der Verbindungseinrichtung.

2. Gerät nach Anspruch 1, bei dem das erste und das zweite optische Element Linsen sind, die derart vorgesehen sind, dass die optischen Achsenrichtungen der Linsen parallel zueinander verlaufen.

3. Gerät nach Anspruch 1 oder 2, bei dem das erste und das zweite optische Element Teile eines Expanders sind.

4. Optisches Gerät nach einem der Ansprüche 1 bis 3, bei dem der Ausrichtmechanismus aufweist:
ein das optische Teil haltendes Ausrichtteil; und
eine das Ausrichtteil schwenkfähig halternde Plattenfeder, welche das Ausrichtelement entlang der optischen Achsenrichtung belastet, so dass dieses an der Steuerkurvenfläche anliegt.

5. Gerät nach einem der Ansprüche 1 bis 4, bei dem der Ausrichtmechanismus einen Halterungsmechanismus aufweist, gebildet durch ein Paar Plattenfedern, die parallel zueinander angeordnet sind.

6. Gerät nach Anspruch 1, bei dem die Verbindungseinrichtung ein Stabglied, welches an einer Oberseite des Steuerkurventeils fixiert ist und sich einhergehend mit der Drehung des Steuerkurventeils dreht, und einen Verbindungsstab, der an einem an dem Ausrichtmechanismus vorgesehenen Ausrichtteil gelagert ist, um über einen Drehpunkt frei drehbar zu sein, aufweist.

7. Gerät nach Anspruch 6, bei dem das optische Teil einen Stiftteil und eine Feder aufweist, wobei die Feder das optische Teil in Richtung des Ausrichtglieds drängt, indem der Stiftteil in Richtung des Drehpunkts belastet wird, vorgesehen an einem Ende des Verbindungsstabs.

8. Gerät nach Anspruch 1, bei dem der Ausrichtmechanismus ein Ausrichtglied aufweist, welches das optische Teil verschieblich hält, ferner an einer etwa mittigen Stelle des optischen Teils eine Öffnung gebildet ist, und die Steuerkurvenfläche an der Öffnungswand der Öffnung anliegen kann.

9. Gerät nach Anspruch 1, bei dem der Ausrichtmechanismus außerdem ein Paar Plattenfedern aufweist, welche an dem Ausrichtglied und einer Basis befestigt sind, um das Ausrichtglied schwenkfähig zu haltern und das Ausrichtglied zu veranlassen, an der Steuerkurvenfläche anzulegen, indem das Ausrichtglied entlang einer Richtung des optischen Wegs belastet wird.

10. Belichtungsvorrichtung, umfassend:
eine Lichtquelle;
das optische Gerät nach einem der Ansprüche 1 bis 9, durch welches ein von der Lichtquelle abgegebener Lichtstrahl läuft; und
eine Fokussieroptik zum Fokussieren des Lichtstrahls, der durch das optische Gerät gelaufen ist, auf eine zu belichtende Fläche.

## Revendications

1. Dispositif optique (26) comportant un axe optique, comprenant :
un élément optique (30) sur lequel au moins un premier élément optique (36) et un second élément optique (38) sont montés ;
un moteur (40) dont le sens de rotation peut être commuté ;
une came (46) montée sur un arbre tournant (44) entraîné en rotation par le moteur ;
un moyen de liaison (50) connecté à la came et adapté pour commuter la position de l'élément optique entre une première position dans laquelle le premier élément optique (36) est disposé sur l'axe optique et le second élément optique (38) est déplacé transversalement par rapport à l'axe optique et une seconde position dans laquelle le second élément optique (38) est disposé sur l'axe optique et le premier élément optique (36) est déplacé transversalement par rapport à l'axe optique ; et
un mécanisme d'alignement (61) qui maintient l'élément optique et qui vient en butée contre une surface de came (46S) de la came et adapté pour déplacer l'élément optique dans la direction de l'axe optique du dispositif à l'intérieur d'une plage de jeu du moyen de liaison.

2. Dispositif optique selon la revendication 1, dans lequel les premier et second éléments optiques sont des lentilles qui sont prévues de telle sorte que les directions d'axe optique des lentilles soient parallèles l'une à l'autre.

3. Dispositif optique selon la revendication 1 ou 2, dans lequel les premier et second éléments optiques sont des éléments structurant un extenseur.

4. Dispositif optique selon l'une quelconque des revendications 1 à 3, dans lequel le mécanisme d'alignement comporte :
un élément d'alignement qui maintient l'élément optique ; et
un ressort en plaque supportant de façon oscillante l'élément d'alignement et poussant l'élément d'alignement suivant la direction d'axe optique pour qu'il vienne en butée contre la surface de came.

5. Dispositif optique selon l'une quelconque des revendications 1 à 4, dans lequel le mécanisme d'alignement comporte un mécanisme de support structuré au moyen de deux ressorts en plaque qui sont disposés parallèlement l'un à l'autre.

6. Dispositif optique selon la revendication 1, dans lequel le moyen de liaison comporte un élément de tige qui est fixé sur un côté supérieur de la came et qui tourne en accompagnant la rotation de la came et une tige de liaison montée sur un élément d'alignement prévu au niveau du mécanisme d'alignement de manière à pouvoir tourner librement via un point de rotation.

7. Dispositif optique selon la revendication 6, dans lequel l'élément optique comporte une partie de broche, et un ressort, qui pousse l'élément optique en direction de l'élément d'alignement en poussant la partie de broche en direction du point de rotation est prévu au niveau d'une partie d'extrémité de la tige de liaison.

8. Dispositif optique selon la revendication 1, dans lequel le mécanisme d'alignement comporte un élément d'alignement qui maintient de façon coulissante l'élément optique, et l'ouverture est formée au niveau d'une position sensiblement centrale de l'élément optique et la surface de came peut venir en butée contre une paroi d'ouverture de l'ouverture.

9. Dispositif optique selon la revendication 8, dans lequel le mécanisme d'alignement comporte en outre une paire de ressorts en plaque et les ressorts en plaque sont fixés à l'élément d'alignement et à une base et ils supportent de façon oscillante l'élément d'alignement et ils ont pour effet que l'élément d'alignement vient en butée contre la surface de came en poussant l'élément d'alignement selon une direction du chemin optique.

10. Dispositif d'exposition comprenant :
une source de lumière ;
le dispositif optique selon l'une des revendications 1 à 9, au travers duquel passe un faisceau lumineux qui sort depuis la source de lumière ; et
un système optique de focalisation qui focalise le faisceau lumineux, lequel est passé au travers du dispositif optique, sur une surface destinée à être exposée.
